(19) Europäisches Patentamt

European Patent Office

Office européen des brevets

(11) Veröffentlichungsnummer: **0 294 594**
**B1**

## (12) EUROPÄISCHE PATENTSCHRIFT

(45) Veröffentlichungstag der Patentschrift:
24.10.90

(51) Int. Cl.⁵: **F16D 35/00**

(21) Anmeldenummer: 88107260.7

(22) Anmeldetag: 06.05.88

(54) Flüssigkeitsreibungskupplung.

(30) Priorität: 10.06.87 DE 3719279

(43) Veröffentlichungstag der Anmeldung:
14.12.88 Patentblatt 88/50

(45) Bekanntmachung des Hinweises auf die Patenterteilung:
24.10.90 Patentblatt 90/43

(84) Benannte Vertragsstaaten:
DE ES FR GB IT SE

(56) Entgegenhaltungen:
US-A- 4 627 523

(73) Patentinhaber: Behr GmbH & Co., Mauserstrasse 3,
D-7000 Stuttgart 30(DE)

(72) Erfinder: Digele, Jörg, Dipl.-Ing.(FH), Weinstrasse 48,
D-7149 Freiberg(DE)

(74) Vertreter: Wilhelm, Hans-Herbert, Dr.-Ing. et al, Wilhelm
& Dauster Patentanwälte Hospitalstrasse 8,
D-7000 Stuttgart 1(DE)

## Beschreibung

Die Erfindung betrifft eine Flüssigkeitsreibungskupplung nach dem Oberbegriff des Patentanspruches 1.

Eine Flüssigkeitsreibungskupplung dieser Gattung ist bekannt (DE-A-32 26 634). Bei dieser Bauart ist im Bereich des äußeren Umfanges der Kupplungsscheibe ein mit Leitflächen versehener Staukörper der Vorderseite der Arbeitskammer zugeordnet, der vor einer Überströmöffnung zur Vorratskammer liegt. Der Staukörper ragt dabei in eine umlaufende Nut der Kupplungsscheibe herein, in der sich an dieser radial äußersten Stelle das Kupplungsöl sammelt. Bei der bekannten Bauart sind zwei solcher Staukörper diametral gegenüberliegend am Umfang der Arbeitskammer vorgesehen, um die Menge des zurückgeförderten Öles zu erhöhen. Mit solchen Bauarten läßt sich eine sogenannte modulierende Regelung, d.h. ein langsames Ansteigen und Abfallen der Drehzahl des der Kupplung zugeordneten Lüfters bei höheren Drehzahlen und bei demgemäß höherer Schlupfdrehzahl erreichen. Ein Nachteil ist aber, daß im Leerlauf oder bei niederen Antriebsdrehzahlen sprunghafte Drehzahländerungen durch die Flüssigkeitsreibungskupplung bewirkt werden, was allgemein als "Sägen" der Kupplung bezeichnet wird.

Es ist die Aufgabe der vorliegenden Erfindung, eine Ausgestaltung einer Flüssigkeitsreibungskupplung der eingangs genannten Art zu finden, mit der auch bei niedrigen Drehzahlen eine modulierende Regelung erreicht werden kann.

Zur Lösung dieser Aufgabe werden bei einer Flüssigkeitsreibungskupplung der eingangs genannten Art die kennzeichnenden Merkmale des Patentanspruches 1 vorgesehen. Durch diese Ausgestaltung wird die Gewähr dafür gegeben, daß die Kupplungsflüssigkeit stets beiden Seiten der Kupplungsscheibe zwangsläufig zugeführt wird, so daß auch bei niedrigen Drehzahlen und demzufolge kleiner umlaufender Flüssigkeitsmenge das Benetzen der Arbeitskammer auf beiden Seiten der Kupplungsscheibe gewährleistet ist. Durch die Erfindung wird eine Zwangsführung der Kupplungsflüssigkeit auf beiden Seiten der Arbeitskammer erreicht. Durch diese Ausgestaltung kann eine gleichmäßige Kraftübertragung auch im niedrigen Drehzahlbereich erreicht werden. Ein "Sägen" tritt nicht auf.

Vorteilhafte Weiterbildungen der Erfindung sind in den Unteransprüchen gekennzeichnet. Die Merkmale der Ansprüche 3 bis 4 ermöglichen eine einfache Realisierung einer Flüssigkeitsweiche, die für die gewünschte Umlenkung der Kupplungsflüssigkeit von der vorderen Arbeitskammer zunächst in die hintere Arbeitskammer und von dort wieder zurück zur Vorratskammer sorgt.

Die Merkmale der Ansprüche 5 und 6 lassen in einfacher Weise die Abgrenzung zwischen vorderer und hinterer Arbeitskammer zu, während die Merkmale des Anspruches 7 eine einfache Ergänzung der baulichen Vereinfachungen darstellen.

Die Merkmale der Ansprüche 9 bis 12 bringen den entscheidenden Vorteil mit sich, daß Kupplungsscheibe und Gehäuse ein Pumpsystem bilden, das mit dazu beiträgt, daß die Kupplungsflüssigkeit neben der durch die Fliehkraft bedingten Wirkung an den größten Durchmesser gefördert wird. Dadurch kann im äußeren Bereich, wo auch die umlaufenden Ringkanäle im Gehäuse nach den Ansprüchen 13 und 14 vorgesehen sind, eine Druckerhöhung erreicht werden. Dadurch können die Arbeitsräume schneller geleert werden und es ergeben sich kürzere Hysteresen für die Kupplung. Gleichzeitig entsteht am Außendurchmesser ein stabiler Ölring, der für einen äußerst ruhigen Lauf der Kupplung sorgt.

Die Erfindung ist anhand eines Ausführungsbeispiels schematisch in der Zeichnung dargestellt und wird im folgenden erläutert. Es zeigen:

Fig. 1 einen schematischen Längsschnitt durch eine Flüssigkeitsreibungskupplung nach der Erfindung,

Fig. 2 den Schnitt durch das Kupplungsgehäuse der Fig. 1 längs der Schnittlinie II-II,

Fig. 3 und 3a die Draufsicht auf die Kupplungsscheibe der Flüssigkeitsreibungskupplung der Fig. 1,

Fig. 4 die vergrößerte Detaildarstellung des oberen Bereiches der Flüssigkeitsreibungskupplung der Fig. 1,

Fig. 5 eine Darstellung ähnlich Fig. 4, jedoch von der anderen Seite, gemäß dem Schnitt V-V in Fig. 6 gesehen,

Fig. 6 den Schnitt durch den Kupplungsteil in der Fig. 4 längs der Linie VI-VI in Fig. 7,

Fig. 7 den Schnitt durch den Kupplungsteil der Fig. 4 längs der Linie VII-VII,

Fig. 8 den Schnitt durch den Kupplungsteil der Fig. 4 längs der Linie VIII-VIII,

Fig. 9 eine schematische und perspektivische Darstellung des als Flüssigkeitsweiche verwendeten Einsatzes der Kupplung der Fig. 1 und

Fig. 10 eine schematische Darstellung der Zwangsführung der Kupplungsflüssigkeit innerhalb des Kupplungsgehäuses.

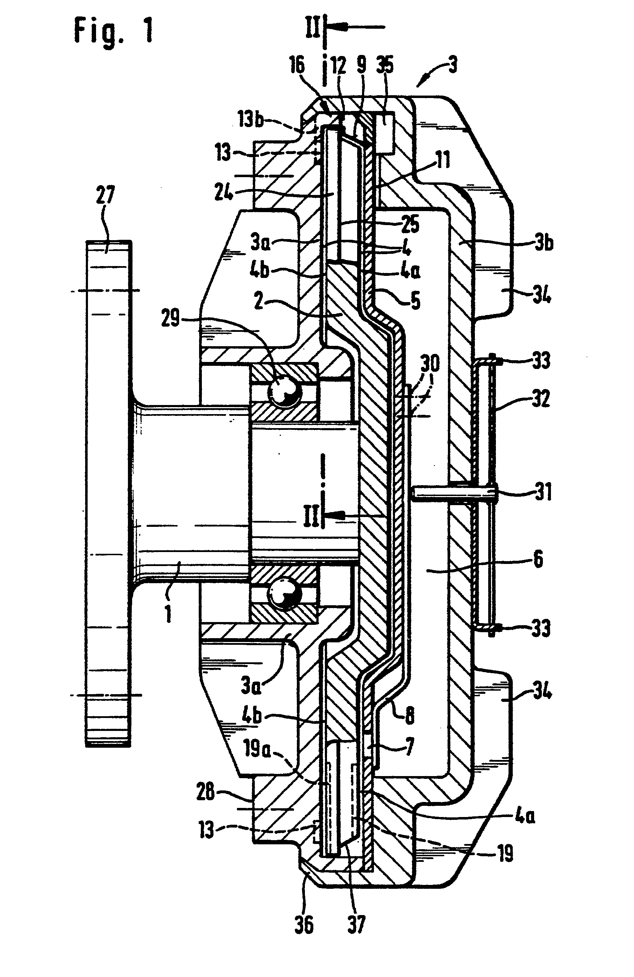

Aus der Fig. I wird der grundsätzliche Aufbau der erfindungsgemäßen Flüssigkeitsreibungskupplung ersichtlich. Die Flüssigkeitsreibungskupplung der Fig. I besteht aus einer fest mit einer angetriebenen Welle (1) verbundenen Kupplungsscheibe (2), die in einer eng an ihre Konturen angepaßten Arbeitskammer (4) eines Kupplungsgehäuses (3) umläuft. Die Kupplungsscheibe (2) dient als Primärteil der Kupplung. Die Welle (2) ist mit einem Flansch (27) versehen, der in nicht näher dargestellter Weise mit einem Antrieb, beispielsweise direkt oder indirekt mit der Kurbelwelle eines Kraftfahrzeugmotors verbunden werden kann. Die in Fig. 1 dargestellte Flüssigkeitsreibungskupplung dient zum Antrieb eines Lüfters für das Kühlsystem. Die Lüfterschaufeln können beispielsweise an den Stellen (28) unmittelbar an den Gehäuseteil (3a) des aus diesem Gehäuseteil (3a) und einem Deckel (3b) bestehenden Gehäuses (3) angeschraubt werden.

Das Kupplungsgehäuse (3) ist über ein Kugellager (29) drehbar auf der Antriebswelle (1) gelagert. Der Deckel (3b) ist mit einem umgebördelten Rand (36) fest mit dem hinteren Gehäuseteil (3a) verbunden und hält eine Trennwand (5) in der dargestellten Lage fest, die mit dem hinteren Gehäuseteil (3a) zusammen die Arbeitskammer (4) bildet. Die Trennwand (5) trennt außerdem eine im Deckel (3b) vorgesehene Vorratskammer (6) für die Kupplungsflüssigkeit von der Arbeitskammer (4) dicht ab. Die Trennwand (5) ist mit einer Durchflußöffnung (7) versehen, durch die das Kupplungsöl von der Vorratskammer (6) aus steuerbar in die Arbeitskammer (4) durchtreten kann. Um diesen steuerbaren Durchtritt zu ermöglichen, ist an der Trennwand (5) ein Ventilhebel (8) schwenkbar angeordnet, der unter seiner Eigenelastizität dazu neigt, sich im Gegenuhrzeigersinn um seine Anlenkstelle (30) herum zu verschwenken, so daß er die Durchflußöffnung (7) freigibt. Der Ventilhebel (8) wird jedoch von einem Stößel (31) in der dargestellten Lage gehalten, welcher durch den Deckel (3b) nach außen dicht hindurchgeführt ist und dort fest mit dem Bimetallstreifen (32) verbunden ist, der an seinen beiden Enden jeweils in einer Halterung (33) am Deckel (3b) gehalten ist. Der Bimetallstreifen (32) erfaßt - in an sich bekannter Weise - die Temperatur der durch eine nicht gezeigten Kühler strömenden Luft und biegt sich mit ansteigender Temperatur nach außen so durch, daß der Stößel (31) sich nach rechts bewegt und die Schwenkbewegung des Ventilhebels (8) freigibt. Mit steigender Temperatur wird daher mehr und mehr Kupplungsflüssigkeit von der Vorratskammer (6) außen in die Arbeitskammer (4) gefördert. Das Gehäuse (3) mit den daran befestigten Lüfterflügeln wird daher in Abhängigkeit von der Temperatur nahezu bis zum Erreichen der Antriebsdrehzahl der Welle (1) mitgenommen. Die Lüfterleistung steigt damit mit steigender Temperatur der Kühlluft.

Der Deckel (3b) ist im Bereich radial außerhalb des Bimetallstreifens (32) mit Kühlrippen (34) versehen, die bei ihrem Umlauf dafür sorgen, daß auch das in der Vorratskammer (6) befindliche Kupplungsöl einer Kühlung unterworfen wird. Um dies auch für den Anteil der Kupplungsflüssigkeit sicherzustellen, der sich jeweils in der Arbeitskammer befindet und sich dort unter den auftretenden Scherkräften erhitzt, ist eine Rücklauföffnung vorgesehen, die noch näher beschrieben wird und die in den radial außerhalb des Rücklaufkanales (11) mündenden Sammelraum (35) mündet, von wo aus der Rückfluß der aus der Arbeitskammer geströmten Kupplungsflüssigkeit in die Vorratskammer bewirkt wird. Wie bei allen Flüssigkeitsreibungskupplungen der beschriebenen Gattung durchläuft die Kupplungsflüssigkeit daher einen Kreislauf. Die umlaufende Flüssigkeitsmenge ist temperaturabhängig und wird durch die Öffnung der Zuflußöffnung (7) bestimmt.

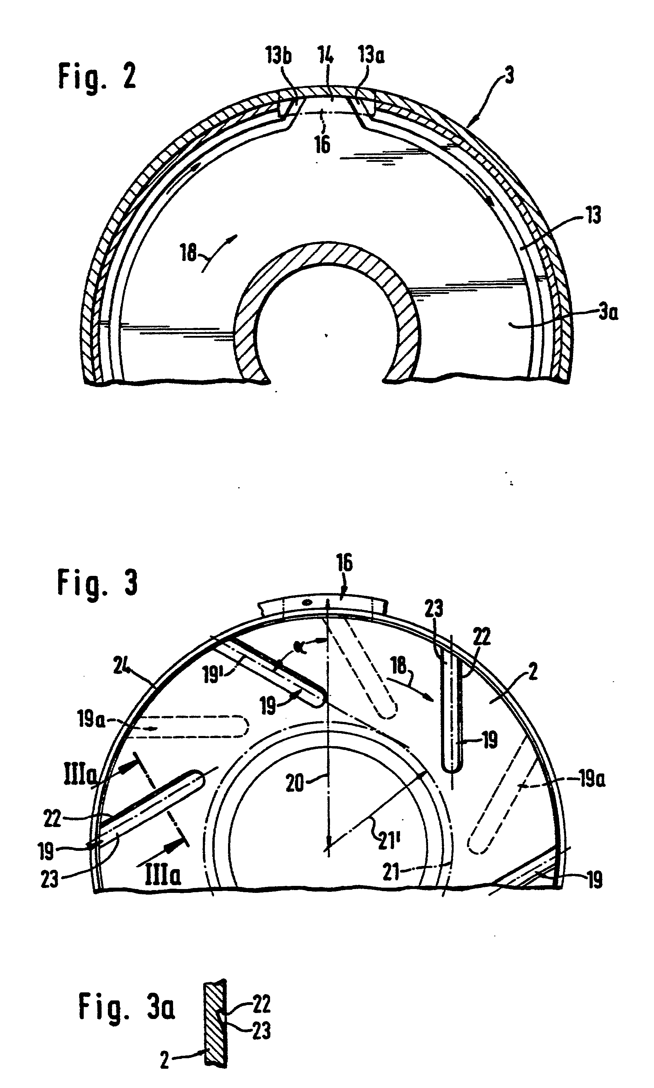

Bei der erfindungsgemäßen Flüssigkeitsreibungskupplung wird nun ein Zwangsumlauf der Kupplungsflüssigkeit sichergestellt, durch den die Kupplungsflüssigkeit zuerst den der Trennwand (5) zugewandten Teil (4a) der Arbeitskammer (4), dann dem der Gehäuserückseite (3a) zugewandten Teil (4b) der Arbeitskammer durchläuft und erst dann wieder über den Rücklaufkanal (11) in die Vorratskammer zurückgeführt wird. Dies wird im einzelnen da durch erreicht, wie aus den Fig. 2, 3 und 4 bis 8 hervorgeht, daß die Kupplungsscheibe (2) mit einem umlaufenden Rand (24) versehen ist, dessen zylindrische Mantelfläche mit dem Innendurchmesser des Gehäuses (3) so zusammenwirkt, daß die Vorderseite (4a) der Arbeitskammer (4) gegenüber der Rückseite (4b) im wesentlichen abgedichtet ist. Der radial verlaufende Absatz (25) dieses Randes (24) wirkt mit einem Einsatz (16) zusammen, der noch beschrieben werden wird.

Die Kupplungsscheibe (2) selbst ist, wie Fig. 3 zeigt, auf ihre der Trennwand (5) zugewandten Seite mit schräg nach außen zur Peripherie hin gerichteten Nuten (19) versehen, die gemäß Fig.3a den Querschnitt eines rechtwinkligen Dreieckes aufweisen, dessen beide Katheten (22 und 23) schräg in die Kupplungsscheibe (2) eingearbeitet sind. Die Ausgestaltung ist dabei so vorgenommen, daß die kürzere der beiden Katheten, die Seite (22), in der Drehrichtung (18) der Kupplungsscheibe (2) vorne liegt, so daß die längere Seite (23) eine verhältnismäßig lange schräge Fläche bildet, an der sich das durch die Drehung der Kupplungsscheibe (2) anstauende Kupplungsöl nach außen drücken läßt.Alle Nuten (19) sind zu diesem Zweck unter einem Winkel ($\alpha$) gegenüber einem Radius (20) der Kupplungsscheibe (2) entgegen der Drehrichtung (18) geneigt. Ihre Achse (19') bildet jeweils eine Tangente an einen Kreis (21), dessen Radius (21') etwa halb so groß ist, wie der Radius (20) der Kupplungsscheibe (2). Durch diese Ausgestaltung wirken die Nuten (19) als Pumpelemente, welche die durch die Öffnung (7) zuströmende Kupplungsflüssigkeit, die sich im Scherspalt des Arbeitskammerteiles (4a) befindet, zum äußeren Umfang hin fördert, wo die Kupplungsflüssigkeit auch in dem Spalt zwischen der an den Rand (24) angrenzenden Umfangsfläche der Kupplungsscheibe (2) hereingerissen wird. Dieser Teil des Umfanges der Kupplungsscheibe (2), der an den Rand (24) zur Trennwand (5) hin angrenzt, bildet eine konusförmige Ringfläche (37).

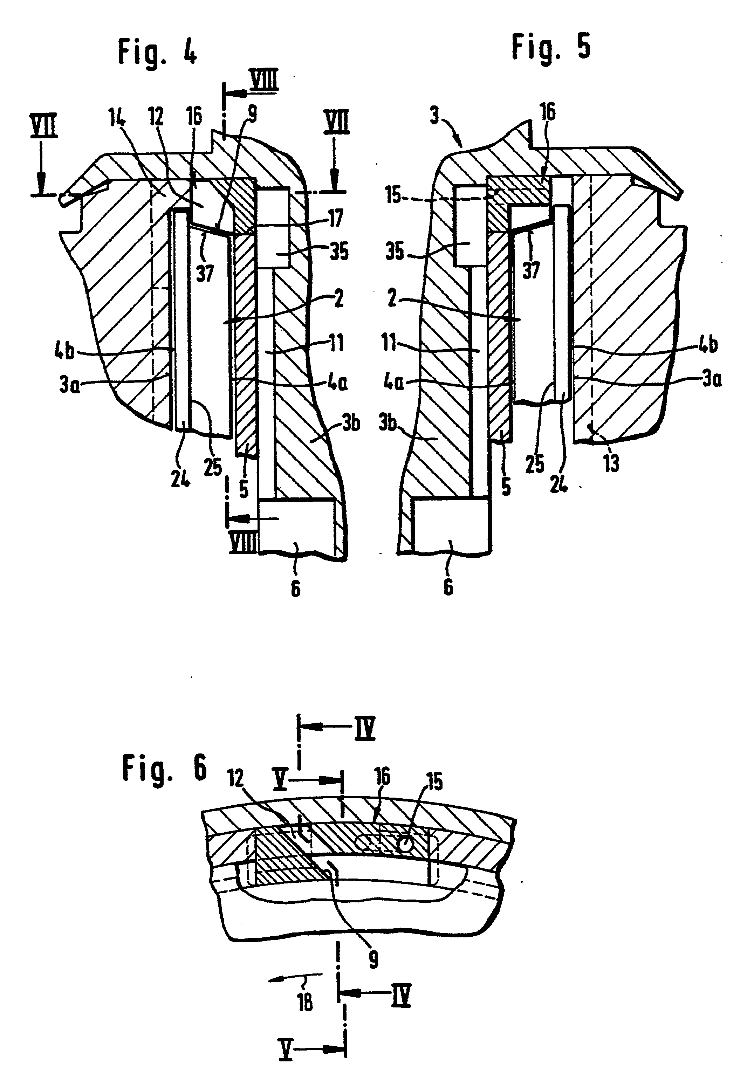

Aus den Fig. 4 und 5 geht im einzelnen die Ausbildung dieser Ringfläche (37) hervor.

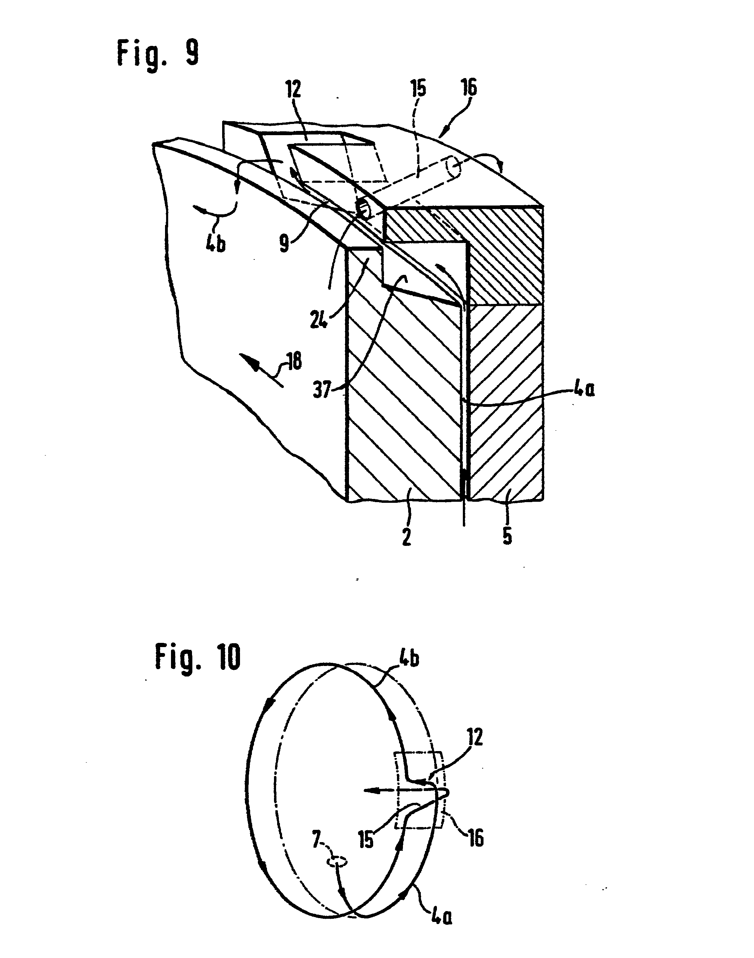

Die auf diese Weise sich im äußersten Bereich des Arbeitskammerteiles (4a) ansammelnde Kupplungsflüssigkeit läuft, wie aus den Fig. 4, 5, 6 und 8 hervorgeht, auf eine Kante (9) auf, die im oberen Bereich der Arbeitskammer (4) als Staukörper in die Arbeitskammer (4a) herein reicht und Teil des vorher erwähnten Einsatzes (16) ist, der in eine radiale Aussparung (17) der Trennwand (5) angrenzend an Aussparungen (38 und 39) im Gehäuseteil (3a) eingesetzt ist, auf die noch eingegangen werden wird. Die von der Kupplungsscheibe (2) mitgerissene Kupplungsflüssigkeit staut sich daher an der Kante (9) an, und wird innerhalb des Einsatzes (16) durch einen Umlenkkanal (12) auf die Rückseite (4b) der Arbeitskammer (4) gelenkt. Dies geht im einzelnen aus der Fig. 9 hervor, wo dieser Umlenkkanal (12) mit der an seinem Eintrittsquerschnitt gelegenen Staukante (9) gezeigt ist. Die Rückseite (3a) des Gehäuses (3) besitzt gemäß Fig. 2 im äußeren Umfangsbereich eine umlaufende Nut (13), die mit einem Ende,das als Anschlußarm (13a) ausgebildet ist, in den Bereich des Einsatzes (16) an der Stelle hereingeführt ist, an der der Umlenkkanal (12) endet. Die von der Vorderseite der Kupplungsscheibe (2), also aus dem Arbeitskammerbereich (4a) kommende Kupplungsflüssigkeit,wird daher durch den Umlenkkanal (12) auf die Rückseite (4b) der Arbeitskammer (4a) und in den Strömungakanal (13) umgelenkt, wo sie, bei der gegebenen Drehrichtung (18) der Kupplungsscheibe, in der Drehrichtung mitgenommen und im rückwärtigen Bereich (4b) der Arbeitskammer (4) verteilt wird.

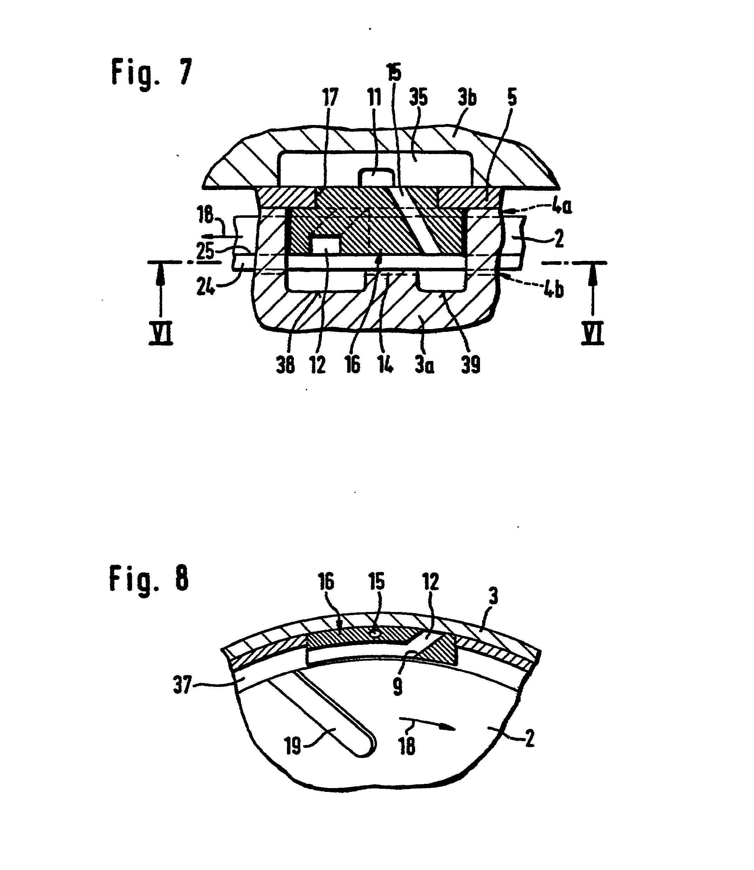

Auch die Rückseite der Kupplungsscheibe (2) ist, wie in Fig. 3 gestrichelt angedeutet, mit Nuten (19a) ausgerüstet, deren Ausbildung jener der Nuten (19) entspricht. Auch auf der Rückseite der Kupplungsscheibe (2) wird daher ein Pumpeffekt auf die Kupplungsflüssigkeit ausgeübt, durch deren Wirkung sich die Kupplungsflüssigkeit bei der Umdrehung in dem Strömungskanal (13) ansammelt. Das andere Ende des Strömungskanales (13) geht in einen Anschlußarm (13b) über, der ebenfalls im Bereich des Einsatzes (16) endet. Zwischen dem Austritt des Strömungskanales (12) und dem Eintritt einer Rückströmbohrung (15) eim Einsatz (16) ist, wie aus Fig. 7 erkennbar ist, ein Vorsprung (14) des Gehäuseteiles (3a) vorgesehen, der seinerseits als ein Staukörper für die im Arm (13b) und im Sinne der Drehrichtung (18) von der Rückseite der Kupplungsscheibe (2) angeförderte Kupplungsflüssigkeit dient. Die Kupplungsflüssigkeit wird daher im Arm (13b) angestaut und gelangt dann durch die in der Drehrichtung (18) schräg zur Trennwand (5) und durch diese hindurchführende Rücklaufbohrung (15) in den Sammelraum (35), von wo aus die Rückströmung durch den Rückströmkanal (11) zur Vorratskammer (6) stattfinden kann.

Durch diese Ausgestaltung wird in der Arbeitskammer (4) ein Kreislauf für die Kupplungsflüssigkeit zwangsläufig aufrechterhalten, der in Fig. 10 schematisch dargestellt ist. Wie dort zu sehen ist, kommt Kupplungsflüssigkeit, die aus der Zuflußöffnung (7) in die Arbeitskammer eintritt, zunächst im Sinne der Drehrichtung (18) durch den vorderen Teil (4a) der Arbeitskammer zum Einsatz (16) und wird dort durch den Umlenkkanal (12) auf die Rückseite (4b) der Arbeitskammer (4) umgelenkt. Die auf der Rückseite (4b) der Arbeitskammer (4) umlaufende Kupplungsflüssigkeit gelangt dann nach einem oder mehreren Umläufen wieder in den Bereich des Einsatzes (16), wird vor dem Staukörper (14) angestaut und tritt durch die Rückströmbohrung (15) in den in Fig. 10 nicht gezeigten Sammelraum (35) und gelangt von dort zurück zur Vorratskammer.

Durch die erfindungsgemäße Ausgestaltung wird daher ein Zwangsumlauf für die Kupplungsflüssigkeit durch Vorder- und Rückseite der Arbeitskammer gewährleistet. Die Kupplungsscheibe wird daher auf beiden Seiten gleichmäßig benetzt, und zwar auch dann, wenn sich im Bereich der Leerlaufdrehzahl oder bei niedrigen Drehzahlen - wenn keine Lüfterleistung gefordert ist - nur wenig Kupplungsflüssigkeit im Umlauf befindet.

Durch diese Ausgestaltung kann daher auch bei geringen Drehzahlen und bei den dann auftretenden kleinen Schlupfdrehzahlen eine gleichmäßige Füllung in der Arbeitskammer aufrechterhalten werden, so daß das sogenannte "Sägen" einer Flüssigkeitsreibungskupplung in diesem Drehzahlbereich vermieden werden kann.

Es hat sich gezeigt, daß durch die Anordnung der Nuten (19) und den dadurch bewirkten Pumpeffekt im äußeren Bereich der Arbeitskammer (4) stets ein umlaufender Flüssigkeitsring aufrechterhalten werden kann, der einen äußerst ruhigen Lauf der Kupplung bewirkt. Durch die durch die Nuten (19) bewirkte Druckerhöhung im Bereich des äußeren Umfanges wird eine schnellere Entleerung der Arbeitskammer (4) bewirkt, die wiederum dazu führt, daß sich kürzere Hysteresen für diese Kupplung ergeben. Die Zwangsführung der Kupplungsflüssigkeit wirkt sich auch bei höheren Drehzahlen nicht nachteilig aus. Sie erlaubt eine insgesamt ruhig arbeitende Flüssigkeitsreibungskupplung zu gestalten, die auch im Bereich der Leerlaufdrehzahl eine modulierende Regelung aufweist.

**Patentansprüche**

1. Flüssigkeitsreibungskupplung mit einer als Primärteil dienenden, fest mit einer angetriebenen Welle (1) verbundenen Kupplungsscheibe (2) und einem als Sekundärteil dienenden Gehäuse (3), das eine die Kupplungsscheibe (2) eng umgebende Arbeitskammer (4) und eine von dieser durch eine Trennwand (5) abgeteilte Vorratskammer (6) für die Kupplungsflüssigkeit aufweist, wobei in der Trennwand (5) eine durch einen Ventilhebel (8) steuerbar zu öffnende oder zu schließende Zuflußöffnung (7) von der Vorratskammer (6) zur Arbeitskammer (4) und im Bereich des äußeren Umfanges der Arbeitskammer (4) eine vor einem Staukörper (9) liegende Rücklaufbohrung mit einem Rücklaufkanal (11) zur Vorratskammer (6) vorgesehen sind, dadurch gekennzeichnet, daß die Vorderseite (4a) und die Rückseite (4b) der Arbeitskammer (4) durch eine Abdichtung zwischen Kupplungsscheibe (2) und Gehäuse (3) voneinander getrennt sind, daß dem Staukörper (9) ein von der Zwischenwand (5) aus axial die Kupplungsscheibe (2) überbrückender Umlenkkanal (12) vorgeschaltet ist, der mit einem umlaufenden Strömungskanal (13) auf der der Rückseite (3a) des Gehäuses (3) zugewandten Rückseite (4b) der Arbeitskammer (4) in Verbindung steht, daß in den Strömungskanal (13) ein etwa axial dem ersten Staukörper (9) gegenüberliegender zweiter Staukörper (14) vorgesehen ist und daß dem zweiten Staukörper (14) ein die Kupplungsscheibe (2) zur Trennwand (5) hin überbrückender und durch die Trennwand führender Rückströmkanal (15) vorgelagert ist, der gegenüber dem Umlenkkanal (12) abgedichtet ist und über den Sammelraum (35) in den Rücklaufkanal (11) zur Vorratskammer (6) mündet.

2. Flüssigkeitsreibungskupplung nach Anspruch 1, dadurch gekennzeichnet, daß der Umlenkkanal (12) und der Rückströmkanal (15) in einem rittlings über der Kupplungsscheibe (2) im Gehäuse (3) gehaltenen Einsatz (16) angeordnet sind.

3. Flüssigkeitsreibungskupplung nach den Ansprüchen I und 2, dadurch gekennzeichnet, daß der Einsatz (16) in eine radiale Aussparung (17) der Trennwand (5) eingesetzt ist.

4. Flüssigkeitsreibungskupplung nach einem der Ansprüche 1 bis 3, dadurch gekennzeichnet, daß der erste Staukörper als eine mit einer schräg gegen die Drehrichtung (18) und den äußeren Umfang (19) der Kupplungsscheibe (2) gerichtete Kante (9) ausgebildet ist, die den Eintrittsquerschnitt des Umlenkkanales (12) begrenzt.

5. Flüssigkeitsreibungskupplung nach Anspruch 1, dadurch gekennzeichnet, daß die Abdichtung zwischen Kupplungsscheibe (2) und Gehäuse (3) durch die zylindrische Mantelfläche eines umlaufenden Randes (24) der Kupplungsscheibe (2) gebildet ist, der an einer korrespondierend zylindrisch verlaufenden Wand des Gehäuses (3) anliegt.

6. Flüssigkeitsreibungskupplung nach einem der Ansprüche 1 bis 5, dadurch gekennzeichnet, daß der seitlich neben dem Rand (24) liegende äußere Umfangsbereich der Kupplungsscheibe (2) als eine konische Ringfläche (19) ausgebildet ist.

7. Flüssigkeitsreibungskupplung nach Anspruch 1, dadurch gekennzeichnet, daß der zweite Staukörper als ein an die Rückseite (2b) der Kupplungsscheibe (2) angrenzender Gehäusevorsprung (14) ausgebildet ist.

8. Flüssigkeitsreibungskupplung nach den Ansprüchen 1 und 2, dadurch gekennzeichnet, daß der Rückströmkanal als eine Bohrung (15) im Einsatz (16) ausgebildet ist, die in der Drehrichtung (18) der Kupplungsscheibe (2) schräg zum Rücklaufkanal (11) hin verläuft.

9. Flüssigkeitsreibungskupplung nach Anspruch 1, dadurch gekennzeichnet, daß die Kupplungsscheibe (2) mindestens auf der der Trennwand (5) zugewandten Vorderseite mit zum äußeren Umfang hin gerichteten offenen Rinnen (19) versehen ist.

10. Flüssigkeitsreibungskupplung nach Anspruch 9, dadurch gekennzeichnet, daß die Rinnen (19) unter einem gegen die Drehrichtung (18) der Drehscheibe (2) geneigten Winkel (α) gegenüber einem Radius (20) der Kupplungsscheibe (2) verlaufen.

11. Flüssigkeitsreibungskupplung nach Anspruch 9 und 10, dadurch gekennzeichnet, daß die Verlängerung der Achsen (19') der Rinnen (19) Tangenten an einen Kreis (21) sind, dessen Mittelpunkt der Mittelpunkt der Kupplungsscheibe (2) ist und dessen Radius (21') etwa die Hälfte des Radius (20) der Kupplungsscheibe (2) beträgt.

12. Flüssigkeitsreibungskupplung nach einem der Ansprüche 9 bis 11, dadurch gekennzeichnet, daß die Rinnen (19) einen Querschnitt eines rechtwinkligen Dreieckes ungleicher Seitenlänge aufweisen, dessen Katheten (22, 23) in die Kupplungsscheibe (2) hereingearbeitet sind und die kleinere Seite (22) in der Drehrichtung (18) vorne liegt.

13. Flüssigkeitsreibungskupplung nach Anspruch 1, dadurch gekennzeichnet, daß der umlaufende Strömungskanal an der Rückseite (4b) der Arbeitskammer (4) als eine Nut (13) ausgebildet ist, die in die Rückseite (3a) des Gehäuses (3) eingearbeitet ist.

14. Flüssigkeitsreibungskupplung nach Anspruch 13, dadurch gekennzeichnet, daß die Nut (13) im Bereich des Umlenkkanales (12) und des Rückströmkanales (15) mit Abzweigarmen (13a, 13b) versehen ist, von denen der in der Drehrichtung (18) hintere Arm (13a) mit dem Ende des Umlenkkanales (12) und der vordere Arm (13b) mit der Eintrittsöffnung des Rückströmkanales (15) in Verbindung stehen.

## Revendications

1. Embrayage à friction de fluide comportant un disque d'embrayage (2) qui sert de pièce primaire et qui est solidarisé avec un arbre entraîné (1), ainsi qu'un carter (3) qui sert de pièce secondaire et qui présente une chambre de travail (4), qui entoure étroitement le disque d'embrayage (2) et, pour le liquide d'embrayage, une chambre de réserve (6) séparée de la chambre de travail par une cloison (5), étant précisé que dans la cloison (5) sont prévus une ouverture d'arrivée (7), que peut ouvrir ou fermer, sur commande, un levier formant soupape (8), pour passer de la chambre de réserve (6) à la chambre de travail (4) ainsi que, dans la zone de la périphérie extérieure de la chambre de travail (4), un perçage de reflux situé devant un élément de barrage (9), avec un canal de reflux (11) en direction de la chambre de réserve (6), caractérisé par le fait que le côté avant (4a) et le côté arrière (4b) de la chambre de travail (4) sont séparés l'un de l'autre par une garniture d'étanchéité située entre le disque d'embrayage (2) et le carter (3); par le fait qu'en amont de l'élément de barrage (9) est prévu un canal de changement de direction (12) qui, depuis la cloison (5), court-circuite axialement le disque d'embrayage (2) et qui est relié avec un canal d'écoulement périphérique (13) prévu du côté arrière (4b) de la chambre de travail (4) orienté vers la partie arrière (3a) du carter (3); par le fait que, dans le canal d'écoulement (13), est prévu un second élément de barrage (14) situé à peu près axialement en face du premier élément de barrage (9); et qu'en avant du second élément de barrage (14) est placé un canal de reflux (15) qui court-circuite le disque d'embrayage (2) en direction de la cloison (5), qui traverse cette cloison, qui est rendu étanche à l'égard du canal de changement de direction (12) et qui, par l'intermédiaire de l'espace de collecte (35), débouche dans le canal de reflux (11) en direction de la chambre de réserve (6).

2. Embrayage à friction de fluide selon la revendication 1, caractérisé par le fait que le canal de changement de direction 1(12) et le canal de reflux (15) sont disposés dans une garniture (16) maintenue à califourchon dans le carter (3) au-dessus du disque d'embrayage (2).

3. Embrayage à friction de fluide selon les revendications 1 et 2, caractérisé par le fait que la garniture (16) est insérée dans un évidement radial (17) de la cloison (5).

4. Embrayage à friction de fluide selon l'une des revendications 1 à 3, caractérisé par le fait que le premier élément de barrage est conçu sous forme d'une arête (9) qui est orientée obliquement par rapport à la direction de la rotation (18) et par rapport à la périphérie extérieure du disque d'embrayage (2) et qui limite la section d'entrée du canal de changement de direction (12).

5. Embrayage à friction de fluide selon la revendication 1, caractérisé par le fait que la garniture d'étanchéité entre le disque d'embrayage (2) et le carter (3) est formée par la surface latérale cylindrique d'un bord périphérique (24) du disque d'embrayage (2) qui s'appuie sur une paroi d'orientation cylindrique correspondante du carter (3).

6. Embrayage à friction de fluide selon l'une des revendications 1 à 5, caractérisé par le fait que la zone périphérique extérieure située latéralement à côté du bord (24), du disque d'embrayage (2) est conçue sous forme de surface annulaire conique (19).

7. Embrayage à friction de fluide selon la revendication 1, caractérisé par le fait que le second élément de barrage est conçu sous forme d'une saillie (14) du carter jouxtant la face arrière (2b) du disque d'embrayage (2).

8. Embrayage à friction de fluide selon la revendication 1 et 2 caractérisé par le fait que le canal de reflux est conçu sous forme d'un perçage (15) réalisé dans la garniture (16) et orienté obliquement par rapport au canal de reflux (11) dans la direction de la rotation (18) du disque d'embrayage (2).

9. Embrayage à friction de fluide selon la revendication 1, caractérisé par le fait que le disque d'embrayage (2) comporte, au moins sur sa face avant orientée du côté de la cloison (5), des rainures ouvertes (19) orientées en direction de sa périphérie extérieure.

10. Embrayage à friction de fluide selon la revendication 9, caractérisé par le fait que les rainures (19) sont inclinées dans le sens de la rotation (18) du disque d'embrayage (2) en formant un angle ($\alpha$) avec un rayon (20) du disque d'embrayage (2).

11. Embrayage à friction de fluide selon la revendication 9 et 10, caractérisé par le fait que les prolongements des axes (19') des rainures (19) sont tangents à un cercle (21) dont le centre est le centre du disque d'embrayage (2) et dont le rayon (21') vaut environ la moitié du rayon (20) du disque d'embrayage (2).

12. Embrayage à friction de fluide selon l'une des revendications 9 à 11, caractérisé par le fait que la section transversale des rainures (19) représente un triangle rectangle de longueur des côtés inégale dont les côtés d'angle droit (22, 23) sont usinés dans le disque d'embrayage (2) et dont le plus petit côté de l'angle droit (22) est situé en avant dans le sens de la rotation (18).

13. Embrayage à friction de fluide selon la revendication 1, caractérisé par le fait que le canal d'écoulement périphérique prévu du côté arrière (4b) de la chambre de travail (4) est conçu sous forme d'une rainure (13) qui est usinée dans la face arrière (3a) du carter (3).

14. Embrayage à friction de fluide selon la revendication 13, caractérisé par le fait que la rainure (13) présente, dans la zone du canal périphérique (12) et du canal de reflux (15), des bras d'embranchement (13a, 13b) dont celui (13a) qui est en arrière dans le sens de la rotation (18) est relié à l'extrémité du canal périphérique (12) et dont celui (13b) qui est en avant est relié avec l'ouverture d'entrée du canal de reflux (15).

**Claims**

1. A fluid friction clutch with a clutch disc (2) used as a primary part rigidly connected with a driven shaft (1), and with a housing (3) used as a secondary part which has a working chamber (4) closely surrounding the clutch disc (2) and a storage chamber (6) separated from the latter by a separation wall (5) for the clutch fluid, there being provided in the separation wall (5) an admission opening (7) to be opened or closed controllably by a valve lever for the flow from the storage chamber (6) to the working chamber (4), and there being provided also in the region of the outer periphery of the working chamber (4) a return opening situated before a retaining element (9) with a return channel (11) to the storage chamber (6), characterized in that the front side (4a) and the rear side (4b) of the working chamber (4) are separated by means of a seal between the clutch disc (2) and the housing (3), in that, mounted upstream of the retaining element (9) is a deflection channel (12) bridging axially the clutch disc (2) from the intermediate partition (5) outwards, said deflection channel (5) being connected with a surrounding flow channel (13) on the rear side (4b) of the working chamber (4) facing the rear side (3a) of the housing (3), in that a second retaining element (14) situated substantially axially opposite the first retaining element (9) is provided in the flow channel (13), and in that, mounted upstream of thed second element, a return flow channel (15) is provided which bridges the clutch disc (2) in the direction of the separating wall (5) and passes through the separation wall, being sealed with respect to the deflection channel (12) and, over the collector space (35), opening out into the return flow channel (11) to the storage chamber (6).

2. A fluid friction clutch according to claim 1, characterized in that the deflection channel (12) and the return flow channel (15) are arranged in an insert (16) held astride the clutch disc (2) in the housing (3).

3. A fluid friction clutch according to claims 1 and 2, characterized in that the insert (16) is set into a radial recess (17) of the separation wall (5).

4. A fluid friction clutch according to one of claims 1 to 3, characterized in that the first retaining element is designed as an edge (9) directed slantingly the direction of rotation (18) and the outer periphery (19) of the clutch disc (2) delimiting the inlet cross-section of the deflection channel (12).

5. A fluid friction clutch according to claim 1, characterized in that the seal between the clutch disc (2) and the housing (3) is formed by the cylindrical shell surface of a surrounding border (24) of the clutch disc (2) which applies on a correspondingly cylindrically-extending wall of the housing (3).

6. A fluid friction clutch according to one of claims 1 to 5, characterized in that the external peripheral area of the clutch disc (2) situated laterally close to the border (24) is designed as a conical annular surface (19).

7. A fluid friction clutch according to claim 1, characterized in that the second retaining element is designed as a housing projection (14) adjacent to the rear side (2b) of the clutch disc (2).

8. A fluid friction clutch according to claims 1 and 2, characterized in that the return flow channel is designed as a hole (15) in the insert which, in the (18) direction of rotation of the clutch disc (2) extends slantwise towards the return flow channel (11).

9. A fluid friction clutch according to claim 1, characterized in that the clutch disc (2) is provided, at least on the front side facing the separation wall (5), with open grooves (19) directed towards the outer periphery.

10. A fluid friction clutch according to claim 9, characterized in that the grooves (19) extend at an angle ($\alpha$) against the direction of rotation (18) of the clutch disc slantingly respective to a radius (20) of the clutch disc (2).

11. A fluid friction clutch according to claims 9 and 10, characterized in that the extensions of the axes (19') of the grooves (19) are tangents to a circle (21) the centre point of which is the centre point of the clutch disc (2) and the radius (21') of which is substantially half the radius (20) of the clutch disc (2).

12. A fluid friction clutch according to one of claims 9 to 11, characterized in that the grooves (19) have the cross-section of a rectangular triangle of unequal side length, the legs (22, 23) of which are incorporated into the clutch disc (2) and the smaller side (22) lies forward in the direction of rotation (18).

13. A fluid friction clutch according to claim 1, characterized in that the surrounding flow channel at the rear side (4b) of the working chamber (4) is designed as a groove (13) which is incorporated into the rear side (3a) of the housing (3).

14. A fluid friction clutch according to claim 13, characterized in that the groove (13) is provided in the region of the deflection channel (12) and of the return flow channel (15) with branching off arms (13a, 13b) of which the rear arm (13a) in the direction of rotation is connected with the end of the deflection channel (12) and the front arm (13b) is connected with the inlet opening of the return flow channel (15).

Fig. 1

EP 0 294 594 B1

Fig. 2

13b  14  13a

3

16

18

13

3a

Fig. 3

16

23

22

24

19'

18

2

19

19a

19

III a

22

20

19a

19

23

21'

III a

21

19

Fig. 3a

22

23

2

Fig. 4

Fig. 5

Fig. 6

Fig. 7

Fig. 8

EP 0 294 594 B1

Fig. 9

12    15    16

4b    9

24

18

37

2    5    4a

Fig. 10

4b

12

7    15    16

4a